Europäisches Patentamt

European Patent Office

Office européen des brevets

(19)

(11) Veröffentlichungsnummer : **0 377 561 B1**

(12) # EUROPÄISCHE PATENTSCHRIFT

(45) Veröffentlichungstag der Patentschrift :
21.08.91 Patentblatt 91/34

(51) Int. Cl.⁵ : **B60C 23/00**

(21) Anmeldenummer : **88903170.4**

(22) Anmeldetag : **10.04.88**

(86) Internationale Anmeldenummer :
**PCT/DE88/00222**

(87) Internationale Veröffentlichungsnummer :
**WO 88/07940 20.10.88 Gazette 88/23**

(54) **REIFENDRUCKREGELANLAGE FÜR KRAFTFAHRZEUGE, INSBESONDERE FÜR ACKERSCHLEPPER.**

(30) Priorität : **18.04.87 DE 8705739 U**

(43) Veröffentlichungstag der Anmeldung :
**18.07.90 Patentblatt 90/29**

(45) Bekanntmachung des Hinweises auf die
Patenterteilung :
**21.08.91 Patentblatt 91/34**

(84) Benannte Vertragsstaaten :
**AT BE CH DE FR GB IT LI LU NL SE**

(56) Entgegenhaltungen :
**DE-C- 827 605**
**DE-C- 3 303 192**
**FR-A- 2 465 602**
**US-A- 4 441 539**

(73) Patentinhaber : **TIGGES, Martin**
**Schlenenweg 30**
**W-4040 Neuss (DE)**

(72) Erfinder : **TIGGES, Martin**
**Schlenenweg 30**
**W-4040 Neuss (DE)**

(74) Vertreter : **Schröter, Martin, Dipl.-Ing.**
**Im Tückwinkel 22**
**W-5860 Iserlohn (DE)**

EP 0 377 561 B1

Jouve, 18, rue Saint-Denis, 75001 PARIS

**Beschreibung**

Die Erfindung betrifft eine Reifendruckregelanlage für Kraftfahrzeuge, insbesondere für Ackerschlepper, nach dem Oberbegriff des Anspruches 1.

Bei Fahrzeugen, wie beispielsweise Ackerschleppern oder Erdbewegungsmaschinen, die häufig auf dem Feld, im Gelände oder auch auf der Straße benutzt werden, ist beim Wechsel der Fahrbahn eine Änderung des Reifendruckes erforderlich, da durch eine Änderung des Reifendruckes die Größe der Reifenauflagefläche veränderbar ist. Durch die Änderung der Auflagefläche läßt sich die Walkarbeit des Reifens ebenfalls verändern und dem jeweiligen Verwendungszweck anpassen, so daß ein unnötiger Reifenverschleiß vermieden ist.

Eine Reifendruckregelanlage ist aus der DE-OS 3303192 bekannt. Bei dieser Reifendruckregelanlage ist von der Achse aus eine Druckluftleitung um das Rad mit dem Reifen herum zu einer auf der Außenseite des Rades an der Radnabe sitzenden Durchführung geführt. Von der Drehdurchführung führt eine weitere Leitung zum Reifenfüllventil. In der dargestellten Ausführungsform ist eine zweite Druckluftleitung zur Steuerung dieses Füllventiles vorgesehen. Die um den Reifen herumgeführten Druckluftleitungen sind außerordentlich hinderlich. Insbesondere ist ein Radwechsel nur möglich, wenn auch die Druckluftleitungen demontiert werden. Auch ein Austausch gegen breitere Räder ist nicht möglich ; was insbesondere bei landwirtschaftlichen Fahrzeugen häufig erforderlich ist. Außerdem sind diese freiliegenden Leitungen sehr störanfällig und erhöhen darüberhinaus die Unfallgefahr, da die Druckleitungen über die Vorderfläche des Rades hinausragen.

Bei anderen Lösungsmöglichkeiten wird vorgeschlagen, die Drehdurchführung im Radlager auf der der Achse zugekehrten Seite des Rades anzuordnen. Zwar werden hierbei die Druckleitungen nicht mehr um das Rad herumgeführt, nachteilig ist aber, daß der zur Verfügung stehende Raum sehr beschränkt ist, so daß der Querschnitt der Druckleitung sehr gering gehalten werden muß. Dies hat zur Folge, daß die Füllzeiten für den Reifen, insbesondere bei Traktoren und anderen Fahrzeugen mit großen Rädern, außerordentlich ausgedehnt sind. Lange Füllzeiten schränken den Wert einer Druckregelanlage für die Reifen erheblich ein, da bei einem Fahrbahnwechsel solange gewartet werden müßte, bis der neue Druck im Reifen eingestellt ist. Der Fahrer eines solchen Fahrzeuges wird sich hieran jedoch erfahrungsgemäß nicht halten, so daß mit einem erhöhten Reifenverschleiß zu rechnen ist.

Da der bei solchen Einrichtungen im Radlager zur Verfügung stehende Platz sehr beschränkt ist, wird auf eine zusätzliche Steuerleitung für das Füllventil verzichtet. Stattdessen wurde vorgeschlagen, ein besonderes Füllventil zu benutzen, welches durch Druckstöße steuerbar ist. Hierbei ist es jedoch erforderlich, hinter diesem Ventil eine Drosselstelle in der Füllleitung vorzusehen, damit ein ordnungsgemäßes Ansprechen des Füllventiles gewährleistet ist. Durch eine solche Drosselstelle wird der Querschnitt der Druckluftleitung weiter verringert, was die Füllzeiten weiter verlängert.

Zur Überwachung des vorgegebenen Reifrndruckes ist aus der DE-C-827605 eine Reifendruckregelanlage der eingangs gennanten, gattungsgemäßen Art bekannt, bei der ebenfalls auf eine zusätzliche Steuerleitung für das Füllventil verzichtet wird mit den vorhergenannten sich daraus ergebenden Nachteilen. Bei dieser Anlage gelangt das Druckmittel von außen gesteuert über die Drehdurchführung zum Reifen, wobei die Drehdurchführung aus zwei koaxial zur Radachse angeordneten Ringkörpern besteht, von denen der eine Ringkörper an der Achse und der andere rohrförmige Ringkörper am Rad befestigt ist. Zwischen berührungsfreien Labyrinthdichtungen ist am inneren Ringkörper mit einer Nut eine umlaufende Ringkammer gebildet, in deren Bereich sowohl am äußeren als auch am inneren Ringkörper die Leitungen für das Druckmittel angeschlossen sind. Die Abdichtung der Ringkammer soll dabei unterstützt werden durch entsprechend druckbeaufschlagtes flüssiges Schmiermittel, welches im Bereich der Labyrinthdichtungen zugeführt werden soll. Abgesehen von der außerordentlich schwierig zu lösenden Abdichtung der Ringkammer über das druckbeaufschlagte Schmiermittel erscheint mit einer solchen Reifendruckregelanlage lediglich eine Konstanthaltung des Reifendruckes möglich. Wegen des außerordentlich geringen Kammerquerschnittes läßt sich mit einer solchen Drehdurchführung der Reifendruck der sehr großen zum Einsatz gelangenden Reifen nicht innerhalb kürzerer Zeit ändern. Mit der vorgesehenen Reifendrucküberwachung ist eine Steuerung von unterschiedlichen Reifendrücken mit großen Druckdifferenzen nicht möglich.

Die Aufgabe der Erfindung besteht darin, eine von außen steuerbare Reifendruckregelanlage der eingangs genannten Art vorzuschlagen, die das rasche Befüllen bzw. Entleeren eines Reifens über eine mit Steuerleitungen geführte Regelung in konstruktiv günstiger und sicherer Weise ermöglicht.

Gelöst wird die Erfindungsaufgabe mit einer Reifendruckregelanlage mit sämtlichen Merkmalen des Anspruches 1.

Die erfindungsgemäße Reifendruckregelanlage besitzt eine zweite gegenüber der ersten Ringkammer abgedichtete weitere Ringkammer zur Durchführung des Steuermittels der in diesem Bereich angeschlossenen Steuerleitungen. Beide Ringkammern sind im ausreichend großen Abstandsraum zwischen den zylindrischen, außen und innen an der Mantelfläche glatten, die Ringkörper bildenden Rohrabschnitten ausgebildet. Es können daher große Kammerquerschnitte erreicht werden, die den Anschluß entsprechender Druckmittelleitungen mit großem Querschnitt ermöglichen. Die vorgeschlagenen Berührungsdichtungen ermöglichen den Abschluß der luftdichten Ringkammern.

Ein über die Steuerleitung steuerbares Füllventil ist von Vorteil, da es nach dem Füllen geschlossen werden kann, so daß die Ringkammern in der Drehdurchführung in einen drucklosen Zustand versetzt werden können, wodurch der Verschleiß herabgesetzt wird. Einleitungssysteme mit speziellen Füllventilen und Drosselstellen sind nicht mehr erforderlich.

Die Rohrabschnitte können lösbar mit dem Rad bzw. dem Radteller und mit der Achse verbunden sein. Sie lassen sich daher jederzeit leicht demontieren, was insbesondere bei Reparaturen von großer Bedeutung ist, um gegebenenfalls die Berührungsdichtungen, wie Ringdichtungen, austauschen zu können. Darüberhinaus ist es möglich, die gesamte Einrichtung auch an Fahrzeugen nachzurüsten, die ursprünglich ohne eine Reifendruckregelanlage hergestellt worden sind.

Am feststehenden Rohrabschnitt an der Achse können Schmierölleitungen für die umlaufenden Berührungsdichtungen angeschlossen sein. Die Berührungsdichtungen lassen sich auf diese Weise ständig schmieren, so daß ihr Verschleiß wesentlich herabgesetzt ist.

Die Rohrabschnitte können innerhalb der Radschüssel angeordnet sein. Die aus den Rohrabschnitten gebildete Drehdurchführung ist relativ geschützt angeordnet und trotzdem bei Reparaturen leicht zugänglich. Der Zwischenraum zwischen den Rohrabschnitten kann dabei zusätzlich nach außen hin abgedichtet sein. Hierdurch wird das Eindringen von Schmutz verhindert, welcher die Funktion der umlaufenden Berührungsdichtungen beeinträchtigen könnte. Die Drehdurchführung kann dabei über dem Radlager angeordnet sein, so daß dieses nach außen hin abgedichtet ist. Das Radlager wird auf diese Weise zusätzlich abgedichtet, so daß keinerlei Schmutz eindringen kann.

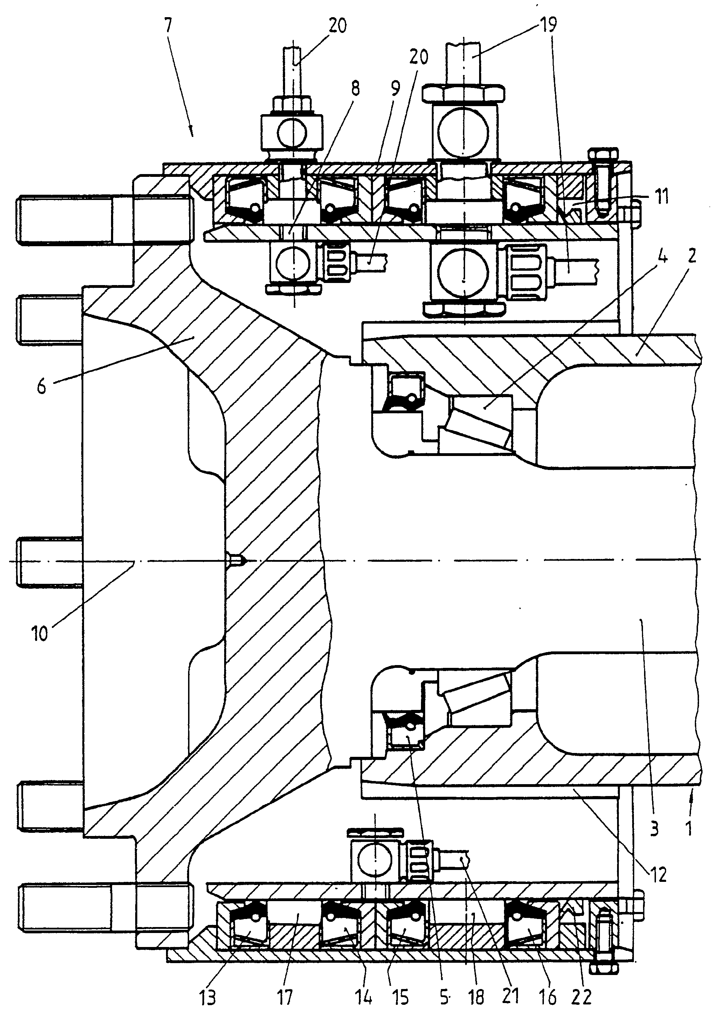

Anhand eines abgebildeten Ausführungsbeispieles wird die Erfindung im folgenden näher erläutert. Die Abbildung zeigt einen Schnitt durch das Ende der Achse eines Kraftfahrzeuges mit dem darauf befindlichen Radlager und dem Radteller.

Die Achse 1 zeigt einen Achstrichter 2 auf, in welchem eine Antriebswelle 3 vorgesehen ist. Am Ende des Achstrichters 2 ist das Radlager 4 vorgesehen, welches als Kegelrollenlager ausgebildet ist. Vor dem Lager sitzt ein Drichtring 5, welcher mit einer Dichtlippe an der Antriebswelle aufliegt und das Eindringen von Schmutz in das Lager verhindert. Das vordere Ende der Antriebswelle 3 geht in den Radteller 6 über, an welchem in bekannter Weise eine nicht weiter dargestellte Radschüssel befestigt ist. Dieser Aufbau entspricht einer Achse wie sie insbesondere bei landwirtschaftlichen Traktoren üblich ist.

Zwischen dem Radteller 6 und dem Achstrichter 2 ist eine Drehdurchführung 7 vorgesehen. Diese Drehdurchführung 7 weist zwei konzentrische Rohrabschnitte 8 und 9 auf, welche koaxial zur Radachse 10 angeordnet sind. Der innere Rohrabschnitt 8 ist dabei von geringerem Durchmesser als der äußere Rohrabschnitt 9, so daß zwischen beiden Rohrabschnitten ein Zwischenraum 11 gebildet ist. Der Rohrabschnitt 8 ist mittels einer Halterung 12 am Achstrichter 2 befestigt und steht damit relativ zum Achstrichter 2 fest. Der Rohrabschnitt 9 ist demgegenüber am Radteller 6 befestigt, so daß er sich zusammen mit diesem relativ zum Achstrichter 2 dreht.

Zwischen den Rohrabschnitten 8 und 9 im Zwischenraum 11 sind umlaufende Ringdichtungen 13, 14, 15 und 16 angeordnet, so daß jeweils zwischen den Dichtungen 13 und 14 bzw. 15 und 16 zwei umlaufende Ringkammern 17 und 18 gebildet sind. Dabei sind zwischen den Ringdichtungen Distanzringe vorgesehen.

Im Bereich der Ringkammer 18 ist am Rohrabschnitt 8 eine Leitung 19 angeschlossen, durch welche das Druckmittel, üblicherweise Druckluft, zum Reifen geführt wird. Ein ähnlicher Anschluß ist für die Leitung am Rohrabschnitt 9 vorgesehen. Ahnliche Anschlüsse sind im Bereich der Ringkammer 17 am Rohrabschnitt 8 bzw. 9 angeordnet. Die hier angeschlossene Leitung 20 dient als Steuerleitung für ein nicht weiter dargestelltes Füllventil am Reifen. Diese Leitung 20 sowie die zugehörige Ringkammer 17 können im Querschnitt-geringer ausgebildet sein als die Leitung 19 mit der Kammer 18. Die Leitung 19 dient zur Zuführung der Druckluft zum Reifen und sollte daher im Querschnitt so groß wie möglich ausgelegt sein. Da hier die Drehdurchführung 7 außerhalb des Radlagers angeordnet ist und zwischen dem Rohrabschnitt 8 und dem Achstrichter ein großer Abstand vorgesehen ist, kann die Leitung 19 im Querschnitt beliebig groß bemessen werden. Die Füllzeit für den Reifen kann dadurch auf ein Minimum reduziert werden. Der zur Verfügung stehende Raum ist dabei so groß, daß auch die zweite Leitung 20 und die zugehörige Ringkammer 17 den Querschnitt der Leitung 19 nicht beeinflussen. Darüberhinaus lassen sich auch Schmierölleitungen 21 an den Rohrabschnitten 8 anschließen, welche im Bereich der Ringdichtungen 13-16 anzuordnen sind. Die Dichtungen können auf diese Weise ständig geschmiert werden, so daß Undichtigkeiten und frühzeitiger Verschleiß ausgeschlossen sind.

Außer den Ringkammern 17 und 18 lassen sich zwischen den Rohrabschnitten 8 und 9 weitere Ringkammern anordnen, falls dies erforderlich ist. Beispielsweise können hier Meßleitungen angeschlossen werden, mit denen der Druck im Reifeninnern erfaßt werden kann, so daß sich voll automatische Reifendruckregelanlagen aufbauen lassen.

Der Zwischenraum 11 zwischen den beiden Rohrabschnitten 8 und 9 ist achsseitig durch eine Dichtung 22 verschlossen. Das Eindringen von Schmutz in diesen Zwischenraum ist dadurch ausgeschlossen. Da die Drehdurchführung 7 über dem Achslager 4 liegt, ist durch die Abdichtung des Zwischenraumes auch der Zugang zum Achslager 4 abgedichtet. Der Schmutzanfall an der Dichtung 5 und damit ihr Verschleiß sinkt auf ein Minimum.

In der dargestellten Ausführungsform sind die Rohrabschnitte 8 und 9 mit dem Radteller 6 bzw. dem Achstrichter 2 verschweißt. Denkbar ist auch eine lösbare Verbindung, beispielsweise mittels Schrauben, so daß sich die Drehdurchführung demontieren läßt. Sie kann daher insbesondere auch nachträglich an Ackerschlepper montiert werden, die ursprünglich nicht mit einer Reifendruckregelanlage ausgestattet wurden.

Zusammenstellung der Bezugszeichen

| 1  | Achse |
|----|-------|
| 2  | Achstrichter |
| 3  | Antriebswelle |
| 4  | Radlager |
| 5  | Dichtung |
| 6  | Radteller |
| 7  | Drehdurchführung |
| 8  | Rohrabschnitt |
| 9  | Rohrabschnitt |
| 10 | Radachse |
| 11 | Zwischenraum |
| 12 | Halterung |
| 13 | Ringdichtung |
| 14 | Ringdichtung |
| 15 | Ringdichtung |
| 16 | Ringdichtung |
| 17 | Ringkammer |
| 18 | Ringkammer |
| 19 | Leitung |
| 20 | Leitung |
| 21 | Schmierölleitung |
| 22 | Dichtung |

**Patentansprüche**

1. Reifendruckregelanlage für Kraftfahrzeuge, insbesondere für Ackerschlepper, bei der das Druckmittel von außen gesteuert über eine Leitung (19) mit einer Drehaurchführung (7) zum Reifen des auf einer feststehenden Achse (1) drehbar gelagerten Rades (6) gelangt und die Drehdurchführung außerhalb des Radlagers (4) aus mindestens zwei koaxial zur Radachse angeordneten Ringkörpern (8, 9) besteht, von denen der eine Ringkörper (8) an der Achse (1) und der andere rohrförmige Ringkörper (9) am Rad (6) befestigt ist und zwischen den beiden Ringkörpern eine radial abgedichtete, umlaufende Ringkammer (18) gebildet ist, in deren Bereich die Leitungen (19) für das Druckmittel angeschlossen sind, **gekennzeichnet durch** mindestens eine zweite gegenüber der ersten Ringkammer (18) abgedichtete weitere Ringkammer (17) zur Durchführung des Steuermittels der in diesem Bereich angeschlossenen Steuerleitungen (20), wobei die beiden Ringkammern (17, 18) im Abstandsraum (11) zwischen zylindrischen, außen und innen an der Mantelfläche glatten, die Ringkörper bildenden Rohrabschnitten (8, 9) ausgebildet und durch Berührungsdichtungen (13, 14, 15, 16) begrenzt und nach außen abgedichtet sind.

2. Reifendruckregelanlage nach Anspruch 1, **dadurch gekennzeichnet,** daß in mehreren koaxialen mit Abstand angeordneten, die Ringkörper bildenden Rohrabschnitten Ringkammern mit unterschiedlichem Achsabstand vorgesehen sind zur Durchführung von Druckmittel, Steuermittel und/oder Meßmitteln.

3. Reifendruckregelanlage nach Anspruch 1 oder 2, **dadurch gekennzeichnet,** daß der Abstandsraum (11) zwischen den Rohrabschnitten (8, 9) nach außen hin abgedichtet ist.

4. Reifendruckregelanlage nach einem oder mehreren der vorangegangenen Ansprüche, dadurch gekennzeichnet, daß an dem an der Achse (1) befestigten Rohrabschnitt (8) Leitungen (21) für die Zufuhr von Schmieröl zu den Berührungsdichtungen (13-16) angeschlossen sind.

5. Reifendruckregelanlage nach einem oder mehreren der vorangegangenen Ansprüche, **dadurch gekennzeichnet,** daß der an der Achse (1) befestigte Rohrabschnitt (8) über dem Radlager (4) angeordnet ist und dieses nach außen hin abdichtet.

**Claims**

1. Tyre pressure control unit for motor vehicles, more especially for tractors, wherein the pressure medium, when controlled from externally, passes to the tyre of the wheel (6), which is rotatably munted on a stationary axle (1), through the intermediary of a line (19) having a rotary transmission means (7), and the rotary transmission means externally of the wheel bearing (4) comprises at least two annular members (8, 9), which are disposed coaxially relative to the wheel axis and of which one annular member (8) is secured to the axle (1), and the other tubular annular member (9) is secured to the wheel (6), and a radially sealed, circumferential annular chamber (18) is formed between the two annular members, the lines (19) for the pressure medium being fitted in the region of said annular chamber, characterised by at least one additional annular chamber (17), which is sealed from the first annular chamber (18) and serves to transmit the control medium of the control lines (20), which are fitted in this region, the two annular chambers (17, 18) being provided in the spacing gap (11) between cylindrical tubular portions (8, 9), which are smooth on their outer and inner surfaces and form the annular members, said tubular portions being defined by contact seals (13, 14, 15, 16) and being outwardly sealed.

2. Tyre pressure control unit according to claim 1, characterised in that annular chambers are provided at different axial spacings in a plurality of coaxial, spaced-apart tubular portions, which form the annular members and serve to transmit pressure medium, control medium and/or measuring means.

3. Tyre pressure control unit according to claim 1 or 2, characterised in that the spacing gap (11) between the tubular portions (8, 9) is outwardly sealed.

4. Tyre pressure control unit according to one or more of the preceding claims, characterised in that lines (21) for supplying lubricating oil to the contact seals (13-16) are connected to the tubular portion (8), which is secured to the axle (1).

5. Tyre pressure control unit according to one or more of the preceding claims, characterised in that the tubular portion (8), which is secured to the axle (1), is disposed above the wheel bearing (4) and seals said bearing outwardly.

## Revendications

1. Dispositif de réglage de la pression de pneus de vehicules à moteur, en particulier de tracteurs agricoles, du type selon lequel la pression, commandée de l'extérieur sur une canalisation (19) d'un passage tournant (7), parvient au pneu de la roue (6) montée mobile autour d'un axe fixe (1) et où le passage tournant, extérieur au palier (4) de la roue, consiste en au moins deux organes annulaires (8, 9) coaxiaux par rapport à l'axe de la roue, dont l'un (8) est fixé sur l'axe (1) et l'autre (9), de configuration tubulaire, est fixé sur la roue (6), une chambre annulaire rotative (18) étanche étant formée radialement entre les deux organes annulaires, dans la zone desquels la canalisation (19) de pression est raccordée, CARACTERISE en ce qu'il comporte une deuxième chambre annulaire (17) plus grande, étanche par rapport à la première chambre annulaire (18), pour le passage du moyen de commande des conduits de manoeuvre (20) raccordés dans cette zone ; en ce que les deux chambres annulaires (17, 18) sont formées dans l'espacement (11) entre deux segments tubulaires (8, 9) cylindriques, lisses à l'intérieur et à l'extérieur sur la surface latérale, lesdites chambres étant délimitées par des joints de contact (13, 14, 15, 16) et étanches vers l'extérieur.

2. Dispositif selon la revendication 1, caractérisé en ce que, dans plusieurs chambres annulaires espacées coaxialement, les segments tubulaires formant lesdits organes tubulaires sont pourvus d'un entraxe différent pour le passage de moyen de pression, de moyen de commande et/ou du moyen de mesure.

3. Dispositif selon l'une quelconque des revendications 1 ou 2, caractérisé en ce que l'espacement (11) entre les segments tubulaires (8, 9) est rendu étanche vers l'extérieur.

4. Dispositif selon l'une quelconque des revendications précitées, caractérisé en ce que des canalisations (21) pour l'alimentation en huile lubrifiante des joints de contact (13-16) sont raccordées au segment tubulaire (8) fixé à l'axe (1).

5. Dispositif selon l'une quelconque des revendications précitées, caractérisé en ce que le segment tubulaire (8) fixé à l'axe (1) est disposé au-dessus du palier de roue (4) et en ce que celui-ci est rendu étanche vers l'extérieur.